# EUROPÄISCHE PATENTSCHRIFT

(11) **EP 3 411 259 B1**
(45) Veröffentlichungstag und Bekanntmachung des Hinweises auf die Patenterteilung: **13.11.2019**
(21) Anmeldenummer: 17700669.9
(22) Anmeldetag: 18.01.2017
(51) Int. Cl.: B60K 37/06, G06F 3/041

(54) **BEDIENVORRICHTUNG UND VERFAHREN ZUM EMPFANGEN EINER ZEICHENFOLGE VON EINEM BENUTZER IN EINEM KRAFTFAHRZEUG**
OPERATING DEVICE AND METHOD FOR RECEIVING A CHARACTER SEQUENCE FROM A USER IN A MOTOR VEHICLE
INSTRUMENT ET PROCÉDÉ DE RÉCEPTION D'UNE SUITE DE CARACTÈRES PROVENANT D'UN UTILISATEUR DANS UN VÉHICULE AUTOMOBILE

(30) Priorität: 05.02.2016 DE 102016001314
(43) Veröffentlichungstag der Anmeldung: 12.12.2018
(73) Patentinhaber: Audi AG, 85045 Ingolstadt (DE)
(72) Erfinder: BOUAZIZ, Tahar, 85055 Ingolstadt (DE)
(86) Internationale Anmeldenummer: PCT/EP2017/050916
(87) Internationale Veröffentlichungsnummer: WO 2017/133890

(56) Entgegenhaltungen:
- DE-A1-102014 204 800
- US-A1- 2013 096 771
- US-A1- 2015 268 746

## Beschreibung

Die Erfindung betrifft eine Bedienvorrichtung für ein Kraftfahrzeug. Die Bedienvorrichtung umfasst eine berührungssensitive Anzeigeeinrichtung, das heißt einen Touchscreen, sowie eine Steuereinrichtung zum Empfangen einer Zeichenfolge von einem Benutzer über eine Bildschirmtastatur, die auf der Anzeigeeinrichtung dargestellt wird. Zu der Erfindung gehört auch ein Kraftfahrzeug, das die erfindungsgemäße Bedienvorrichtung aufweist. Schließlich gehört zu der Erfindung auch ein Verfahren zum Empfangen einer Zeichenfolge von einem Benutzer mittels einer Bedienvorrichtung in einem Kraftfahrzeug.

Die Eingabe einer Zeichenfolge mittels Bildschirmtastatur stellt einen effizienten Weg dar, um in einem Kraftfahrzeug eine Zeichenfolge einzugeben, um beispielsweise ein Navigationsziel festzulegen. Allerdings erfordert die Bedienung einer Bildschirmtastatur auch ein derart hohes Maß an Aufmerksamkeit, dass eine Tastaturbenutzung durch einen Fahrer während einer Fahrt des Kraftfahrzeugs nicht erwünscht ist. Allerdings möchte man auf die Bildschirmtastatur auch nicht verzichten, da die Eingabe der Zeichenfolge auch beispielsweise durch einen Beifahrer getätigt werden kann.

Im Zusammenhang mit der Unterscheidung zwischen einem Fahrer und einem Beifahrer ist aus der US 2013/0096771 A1 bekannt, dass eine Bedienvorrichtung Sprachkommandos empfängt und anhand einer Stimmerkennung entscheidet, ob das Sprachkommando von einem Fahrer oder einem Beifahrer ausgesprochen wird. Falls der Fahrer das Sprachkommando spricht, werden weitere Bedienschritte blockiert, damit die Aufmerksamkeit des Fahrers nicht von seiner Fahraufgabe abgelenkt wird. Dies erfordert allerdings, dass der Fahrer spricht, damit er erkannt werden kann.

Aus der DE 102 49 686 A1 ist eine Bedienvorrichtung für ein Kraftfahrzeug bekannt, die bei einer Fahrt des Kraftfahrzeuges, wenn dieses schneller als ein Geschwindigkeitsgrenzwert rollt, bestimmte Funktionen sperrt. Somit können diese Funktionen durch den Fahrer während der Fahrt nicht benutzt werden. Um einem Beifahrer deren Benutzung zu ermöglichen, ist ein Freigabetaster auf der Beifahrerseite derart angeordnet, dass dieser Taster nur durch den Beifahrer zu erreichen ist. Der Beifahrer kann also die gesperrten Funktionen freischalten, indem er den Taster betätigt. Dies erfordert allerdings zusätzlichen Schaltungsaufwand im Kraftfahrzeug.

Aus der DE 10 2012 014 074 A1 ist bekannt, die Bedienung einer Fahrzeugfunktion über ein tragbares Endgerät durchzuführen, dessen Position im Fahrgastraum überwacht wird. Je nach Position des Endgeräts werden dabei einige Funktionen gesperrt, sodass ein Fahrer von seiner Sitzposition aus das Endgerät nicht bedienen kann. Diese Lösung lässt sich allerdings nicht für fest im Kraftfahrzeug eingebaute Bedienvorrichtungen nutzen.

Das Dokument US 2015/268746 A1 offenbart, gemäß dem Oberbegriff der Ansprüche 1 und 10, ein System und Verfahren zum Steuern der Ausführung komplexer Operationen auf Touchscreens in einem Fahrzeug, das sich oberhalb einer vorbestimmten Minimalgeschwindigkeit bewegt. Das System umfasst einen Sensor zum Bestimmen, dass der Touchscreen durch den Fahrer berührt werden wird oder der Fahrer beabsichtigt dies zu tun. Der Touchscreen darf dabei keine komplexe Operation ausführen, wenn das Fahrzeug sich oberhalb der Minimalgeschwindigkeit bewegt, falls der Touchscreen von dem Fahrer berührt wird.

Das Dokument DE 10 2014 204 800 A1 offenbart ein Verfahren zum Bereitstellen einer graphischen Nutzerschnittstelle in einem Fahrzeug, bei dem zumindest ein Objekt zur Wiedergabe einer ersten Teilmenge einer Gesamtinformation in zumindest einer ersten Darstellungsart auf einer Anzeigefläche graphisch dargestellt wird. Eine Bedienabsicht eines Nutzers wird erfasst. Weiterhin wird eine Relativposition des Nutzers bezüglich der Anzeigefläche ermittelt. Wenn die Bedienabsicht des Nutzers erfasst worden ist, wird das Objekt in eine zweite Darstellungsart überführt wird, bei der das Objekt perspektivisch oder dreidimensional um eine Achse um einen Schwenkwinkel in Richtung der Relativposition geschwenkt angezeigt wird.

Der Erfindung liegt die Aufgabe zugrunde, in einem Kraftfahrzeug die Bedienung einer Bedienvorrichtung durch einen Fahrer der Fahrsituation angemessen auszugestalten.

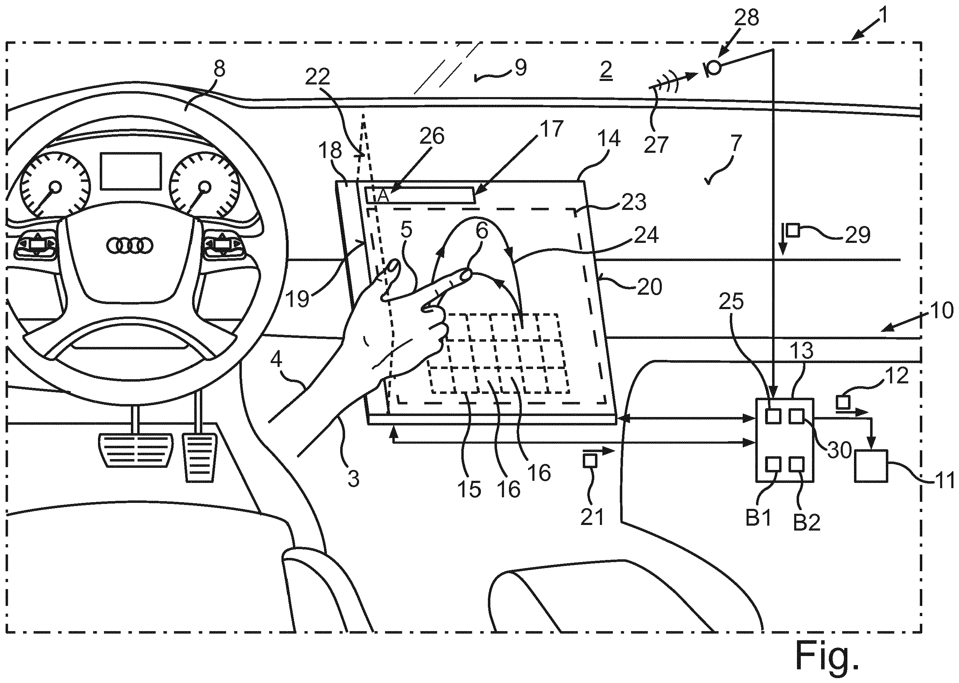

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figur offenbart.

Durch die Erfindung ist eine Bedienvorrichtung für ein Kraftfahrzeug bereitgestellt. In der beschriebenen Weise weist die Bedienvorrichtung eine berührungssensitive Anzeigeeinrichtung, also beispielsweise einen Berührungsbildschirm (Touchscreen), und eine Steuereinrichtung auf. Die Steuereinrichtung ist dazu eingerichtet, in einem vorbestimmten Bedienmodus auf der Anzeigeeinrichtung eine Bildschirmtastatur zum Empfangen einer Zeichenfolge von einem Benutzer anzuzeigen. Somit ist es dem Benutzer möglich, effizient eine Zeichenfolge mittels der Bildschirmtastatur einzugeben. Allerdings möchte man in der beschriebenen Weise verhindern, dass dies der Fahrer tut, während er das Kraftfahrzeug führt. Hierzu ist erfindungsgemäß eine Sensoreinrichtung bereitgestellt und dazu eingerichtet, eine Annäherung eines Objekts an die Anzeigeeinrichtung zu detektieren. Es wird also durch die Sensoreinrichtung beispielsweise detektiert, ob sich als das Objekt ein Finger oder eine Hand an die Anzeigeeinrichtung annähert. Hierbei wird zwischen einer fahrerseitigen Annäherung von einer vorbestimmten Fahrerseite her und einer beifahrerseitigen Annäherung von einer der Fahrerseite gegenüberliegenden Beifahrerseite her unterschieden. Die Sensoreinrichtung signalisiert also, ob sich das Objekt von der Fahrerseite oder der Beifahrerseite nähert. Dies kann auch dadurch realisiert sein, dass die Annäherung nur signalisiert wird, falls sie von der Fahrerseite her erfolgt. Die Steuereinrichtung ist dazu eingerichtet, bei einer detektierten fahrerseitigen Annäherung des Objekts den Bedienmodus zu deaktivieren und stattdessen einen von dem Bedienmodus verschiedenen, alternativen Bedienmodus zu aktivieren. Nähert sich also das Objekt, also beispielsweise ein Gegenstand, wie beispielsweise ein Bedienstift, oder eine Hand oder ein Finger, von der Fahrerseite her, so wird der Bedienmodus mit der Bildschirmtastatur deaktiviert. bei Annäherung von der Beifahrerseite her bleibt der erste Bedienmodus dagegen freigegeben oder aktiv.

Durch die Erfindung ergibt sich der Vorteil, dass auf der Anzeigeeinrichtung eine Bildschirmtastatur bereitgestellt werden kann, die auch zur Benutzung von der Beifahrerseite her verfügbar ist und/oder verfügbar bleibt, wenn man sich von dort aus mit einem Objekt nähert. Dagegen wird der Bedienmodus mit seiner Bildschirmtastatur deaktiviert, falls von der Fahrerseite her versucht wird, sich der Anzeigeeinrichtung und damit der Bildschirmtastatur zu nähern. Dem Fahrer steht somit die Bildschirmtastatur nicht zur Verfügung, sodass er auch nicht deren Benutzung ins Auge fassen wird.

Die besagte Sensoreinrichtung kann beispielsweise auf der Grundlage einer Kamera realisiert sein, welche die Bewegung von Fahrzeuginsassen erfasst. Eine Bildauswerteeinheit kann anhand der Kamerabilder dann beispielsweise die Armbewegungen oder Handbewegungen der Fahrzeuginsassen erkennen. Zusätzlich oder alternativ dazu kann beispielsweise an einer fahrerseitigen Kante der Anzeigeeinrichtung eine Sensoreinheit beispielsweise auf der Grundlage von zumindest einem Näherungssensor und/oder Infrarotsensor realisiert sein, welcher jeweils eine Annäherung eines Objekts von der Fahrerseite her detektiert oder sensiert.

In Bezug auf den alternativen Bedienmodus kann beispielsweise vorgesehen sein, die Eingabe einer Zeichenfolge vollständig zu sperren. Mit anderen Worten wird also die Bildschirmtastatur deaktiviert und keine Bedienalternative angeboten. Der Fahrer kann somit die entsprechende Funktionalität der Bedienvorrichtung, für welche die Zeichenfolge vorgesehen ist, überhaupt nicht nutzen. Bevorzugt ist aber vorgesehen, dass der alternative Bedienmodus dazu eingerichtet ist, die Zeichenfolge vom Fahrer ohne die Bildschirmtastatur zu empfangen. Es wird also eine echte Eingabealternative bereitgestellt.

So sieht eine Weiterbildung vor, dass der alternative Bedienmodus anstelle der Bildschirmtastatur eine Handschrifteingabe für einen Fahrer des Kraftfahrzeugs vorsieht. Hierzu ist die Steuereinrichtung dazu eingerichtet, mittels der berührungssensitiven Anzeigeeinrichtung an dieser eine Zeichenspur zu erfassen. Der Fahrer kann dann in vorteilhafter Weise beispielsweise mit einem Finger oder allgemein mit dem Objekt die Zeichen der Zeichenfolgen auf der Anzeigeeinrichtung als Zeichenspur eingeben oder malen. Dies weist den Vorteil auf, dass die Bewegung durch die Berührung der Anzeigeeinrichtung geführt oder gestützt ist. Alternativ dazu oder zusätzlich kann vorgesehen sein, mittels einer Kamera eine vom Fahrer frei im Raum berührungslos durchgeführte Handbewegung und/oder Fingerbewegung als Zeichenspur zu erfassen. Hierdurch ergibt sich der Vorteil, dass der Fahrer seinen Blick durchgehend auf den Straßenverkehr gerichtet halten kann und lediglich mit seinem Finger oder seiner Hand die einzugebenden Zeichen nacheinander frei in der Luft zeichnen kann, nachdem er sich der Bedienvorrichtung von der Fahrerseite her angenähert hat. Dieses Luftschreiben bedarf keiner visuellen Kontrolle durch den Fahrer.

Eine Weiterbildung stellt anstelle der Bildschirmtastatur weiterhin berührungssensitive Bedienflächen bereit, die aber vereinfacht sind, sodass der Fahrer mit einer kürzeren visuellen Kontrolle die Zeichenfolge eingeben kann mit bei der Bildschirmtastatur. Diese Weiterbildung sieht vor, dass die Steuereinrichtung dazu eingerichtet ist, für den alternativen Bedienmodus auf der Anzeigeeinrichtung im Vergleich zu Tasten der Bildschirmtastatur in der Anzahl reduzierte und/oder in der Größe größere Bedienflächen zum Empfangen der Zeichenfolge darzustellen. Beispielsweise können Bedienflächen dargestellt werden, welche die wahrscheinlichsten Zeichenfolgen angeben, beispielsweise zumindest ein zuvor eingegebenes Navigationsziel und/oder zumindest ein als favorisiert markiertes Navigationsziel. Der Fahrer kann dann also nicht durch Eingeben einzelner Zeichen ein neues Navigationsziel definieren oder festlegen. Diese Weiterbildung weist aber den Vorteil auf, dass weiterhin bedienflächenbasiert eine Eingabe ermöglicht ist und hierbei der Fahrer aber weniger Zeit zum Entscheiden oder Eingeben benötigt.

Eine Weiterbildung verzichtet vollständig auf die Nutzung der Anzeigeeinrichtung, wodurch die Ablenkung des Fahrers minimiert ist. Bei dieser Weiterbildung ist die Steuereinrichtung dazu eingerichtet, für den alternativen Bedienmodus eine Sprachbedienung zu aktivieren. Der Fahrer kann also die Zeichenfolge sprechend eingeben.

Eine Weiterbildung betrifft die Ausgestaltung einer Rückmeldung, anhand welcher der Fahrer überprüfen kann, ob er die Zeichenfolge korrekt eingegeben hat. Die Weiterbildung sieht vor, dass die Steuereinrichtung dazu eingerichtet ist, für den alternativen Bedienmodus eine Eingaberückmeldung bereitzustellen, indem ein bereits erfasstes Zeichen der Zeichenfolge auf der Anzeigeeinrichtung angezeigt wird. Der Fahrer kann also den Blick auf das Verkehrsgeschehen halten und dann bei Gelegenheit die Anzeigeeinrichtung betrachten und bekommt hier das bereits erfasste oder eingegebene Zeichen angezeigt. Er kann sich somit nach Bedarf Zeit lassen, um die Zeichenfolge zu vervollständigen und kann jederzeit bei Gelegenheit überprüfen, ob die bisher eingegebene Zeichenfolge korrekt ist. Zusätzlich oder alternativ zum Darstellen des erfassten Zeichens sieht eine Weiterbildung vor, mittels einer synthetischen Sprachausgabe ein bereits erfasstes Zeichen akustisch anzusagen. Der Fahrer hört also die erkannten Buchstaben oder Zeichen. Dies ist vollständig anzeigelos möglich, wodurch sich der zusätzliche Vorteil ergibt, dass der Fahrer für die Überprüfung der Zeichenfolge seinen Blick nicht vom Verkehrsgeschehen abwenden muss.

Eine Weiterbildung sieht vor, dass die Steuereinrichtung dazu eingerichtet ist, von dem Bedienmodus in den alternativen Bedienmodus nur zu wechseln, falls eine Fahrgeschwindigkeit des Kraftfahrzeugs größer als eine vorbestimmte Mindestgeschwindigkeit ist. Die Mindestgeschwindigkeit kann 0 km/h oder beispielsweise auch einen Wert in einem Bereich kleiner als 10 km/h, insbesondere kleiner oder gleich 6 km/h, betragen. Diese Weiterbildung weist den Vorteil auf, dass auch der Fahrer die Bildschirmtastatur benutzen kann, wenn dies die Fahrsituation erlaubt.

Eine Weiterbildung betrifft hierzu den Fall, dass der Fahrer beispielsweise im Stillstand des Kraftfahrzeugs, beispielsweise an einer Ampel, die Bildschirmtastatur benutzt und bei noch nicht vollständig eingegebener Zeichenfolge dann losfährt und hierdurch die Fahrgeschwindigkeit die Mindestgeschwindigkeit überschreitet. Die Steuereinrichtung ist bei dieser Weiterbildung dazu eingerichtet, eine im Bedienmodus mit Bildschirmtastatur bereits eingegebene Teilzeichenfolge bei einem Wechsel in den alternativen Bedienmodus beizubehalten und die weitere Eingabe der Zeichenfolge im alternativen Bedienmodus fortzuführen. Hierdurch ergibt sich also ein nahtloser Übergang bei der Eingabe der Zeichenfolge, ohne dass dem Fahrer die bereits eingegebene Teilzeichenfolge verloren geht, nur weil er mit dem Kraftfahrzeug losgefahren ist.

Weitere Weiterbildungen betreffen die Frage, wann wieder von dem alternativen Bedienmodus zurück in den Bedienmodus mit der Bildschirmtastatur gewechselt werden soll. Gemäß einer Weiterbildung ist die Steuereinrichtung dazu eingerichtet, den alternativen Bedienmodus wieder zu deaktivieren, falls die Sensoreinrichtung eine Abwesenheit des fahrerseitigen Objekts signalisiert. Das Deaktivieren des alternativen Bedienmodus impliziert das Aktivieren des Bedienmodus mit der Bildschirmtastatur. Sobald also der Fahrer das Objekt, beispielsweise seine Hand, wieder von der Anzeigeeinrichtung entfernt, wird wieder in den Bedienmodus mit der Bildschirmtastatur zurückgewechselt. Hierdurch ergibt sich der Vorteil, dass die Bildschirmtastatur unmittelbar wieder verfügbar ist. Alternativ dazu ist in einer Weiterbildung vorgesehen, dass der alternative Bedienmodus erst wieder deaktiviert wird, falls die Sensoreinrichtung eine beifahrerseitige Annäherung eines Objekts signalisiert. Der Fahrer kann also fahrerseitig ein Objekt annähern und dann wieder entfernen, und bekommt hierbei weiterhin den alternativen Bedienmodus dargeboten. Dies weist den Vorteil auf, dass der Fahrer die Eingabe der Zeichenfolge auch unterbrechen kann, um beispielsweise ein Fahrermanöver auszuführen, das beide Hände am Lenkrad erfordert. Hierdurch wird das Eingeben der Zeichenfolge nicht gestört, da der alternative Bedienmodus beibehalten wird.

Wie bereits ausgeführt, gehört zu der Erfindung auch ein Kraftfahrzeug mit einer Ausführungsform der erfindungsgemäßen Bedienvorrichtung. Die berührungssensitive Anzeigeeinrichtung der Bedienvorrichtung ist dabei zwischen einem Fahrersitz und einem Beifahrersitz des Kraftfahrzeugs angeordnet. Das erfindungsgemäße Kraftfahrzeug weist den Vorteil auf, dass mit ein und derselben Anzeigeeinrichtung zum Darstellen einer Bildschirmtastatur sowohl dem Fahrer als auch dem Beifahrer die Bedienung der Bedienvorrichtung ermöglicht wird, ohne dass hierdurch der Fahrer durch die Bildschirmtastatur unnötig abgelenkt wird. Das erfindungsgemäße Kraftfahrzeug ist bevorzugt als Kraftwagen, insbesondere als Personenkraftwagen, ausgestaltet.

Zu der Erfindung gehört schließlich auch ein Verfahren zum Empfangen einer Zeichenfolge von einem Benutzer mittels einer Bedienvorrichtung in einem Kraftfahrzeug, wobei eine Steuereinrichtung der Bedienvorrichtung in einem Bedienmodus auf einer berührungssensitiven Anzeigeeinrichtung eine Bildschirmtastatur zum Empfangen der Zeichenfolge anzeigt. Eine Sensoreinrichtung detektiert eine Annäherung eines Objekts an die Anzeigeeinrichtung. Hierbei wird zwischen der beschriebenen fahrerseitigen Annäherung und der beifahrerseitigen Annäherung unterschieden. Die Steuereinrichtung der Bedienvorrichtung deaktiviert bei einer detektierten fahrerseitigen Annäherung des Objekts den Bedienmodus und aktiviert stattdessen den beschriebenen von dem Bedienmodus verschiedenen, alternativen Bedienmodus, der insbesondere ohne die Bildschirmtastatur ausgestaltet ist, also tastaturlos ist.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt die einzige Figur eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt von einem Kraftfahrzeug 1 einen Fahrgastraum oder Fahrzeuginnenraum 2 aus der Perspektive eines Fahrers 3, von dem in der Figur nur ein Unterarm 4, eine Hand 5 und ein Finger 6 dargestellt sind. Bei dem Kraftfahrzeug 1 kann es sich beispielsweise um einen Kraftwagen, insbesondere einen Personenkraftwagen, handeln. Dargestellt sind ein Armaturenbrett 7, ein Lenkrad 8 und eine Frontscheibe oder Windschutzscheibe 9.

Das Kraftfahrzeug 1 kann eine Bedienvorrichtung 10 aufweisen, mittels welcher eine oder mehrere Fahrzeugkomponenten 11 durch den Fahrer 3 bedient werden können. Durch die Bedienvorrichtung 10 werden Steuersignale 12 zum Steuern oder Stellen der Fahrzeugkomponenten 11 erzeugt. Hierzu weist die Bedienvorrichtung 10 eine Steuereinrichtung 13 und einen Touchscreen oder Berührungsbildschirm 14 auf. Der Berührungsbildschirm 14 stellt eine berührungssensitive Ausgabeeinrichtung dar. Die Steuereinrichtung 13 kann beispielsweise auf der Grundlage einer Prozessoreinrichtung, beispielsweise eines Mikrocontrollers oder Mikroprozessors, realisiert sein.

Für die weitere Erläuterung des Beispiels sei angenommen, dass durch die Bedienvorrichtung 10 als eine Fahrzeugkomponente 11 eine Navigationseinrichtung oder ein Navigationssystem gesteuert wird. Der Fahrer 3 möchte ein Navigationsziel als Zeichenfolge eingeben, also z.B. einen Städtenamen. Zum Eingeben der Zeichenfolge zeigt die Steuereinrichtung 13 in einem Bedienmodus B1 zunächst eine Bildschirmtastatur 15 mit Zeichentasten 16 auf dem Berührungsbildschirm 14 an. Von den Zeichentasten 16 sind in der Figur der Übersichtlichkeit halber nur einige mit einem Bezugszeichen versehen. In dieser Situation ist es beispielsweise einem (nicht dargestellten) Beifahrer möglich, die Zeichentasten 16 auf dem Berührungsbildschirm 14 nacheinander anzutippen und hierdurch buchstabenweise das Navigationsziel als Text einzugeben. Die erkannten angegebenen Zeichen können beispielsweise in einem Ausgabefeld 17 auf dem Berührungsbildschirm 14 angezeigt werden.

Die Bedienung der Bildschirmtastatur 15 erfordert allerdings ein derart hohes Maß an Aufmerksamkeit, dass bei dem Kraftfahrzeug 1 verhindert ist, dass der Fahrer 3 während einer Fahrt des Kraftfahrzeugs 1 die Bildschirmtastatur 15 in der beschriebenen Weise benutzen kann.

Um die Benutzung zu verhindern, ist bei dem Kraftfahrzeug 1 eine Sensoreinrichtung 18 bereitgestellt, welche detektiert, ob sich ein Objekt, beispielsweise der Hand 5, an den Berührungsbildschirm 14 von einer Fahrerseite 19 her annähert. Ein Sensorsignal 21 der Sensoreinrichtung 19 signalisiert also eine Annäherung von der Fahrerseite 19 her. Bei einer Annäherung von einer gegenüberliegenden Beifahrerseite 20 her signalisiert die Sensoreinrichtung 18 entweder gar nichts oder sie signalisiert eine beifahrerseitige Annäherung. Die Unterscheidung zwischen fahrerseitiger und beifahrerseitiger Annäherung kann also auch darin bestehen, dass nur bei fahrerseitiger Annäherung das Sensorsignal 21 überhaupt eine Annäherung signalisiert oder dass ausdrücklich eine Richtungsangabe Fahrerseite / Beifahrerseite signalisiert wird.

Durch die Sensoreinrichtung 18 kann also beispielsweise eine virtuelle Trennebene 22 überwacht werden, bei deren Durchstoßung durch die Hand 5 des Fahrers 3 das Sensorsignal 21 mit der fahrerseitigen Annäherung an die Steuereinrichtung 13 übermittelt wird. Die Sensoreinrichtung 18 kann beispielsweise auf der Grundlage eines oder mehrerer Näherungssensoren, beispielsweise kapazitiver Näherungssensoren, und/oder auf der Grundlage eines oder mehrerer Infrarotsensoren realisiert sein. Die Sensoreinrichtung 18 kann auch auf der Grundlage einer Kamera und einer Bildverarbeitungseinrichtung realisiert sein.

Bei detektierter fahrerseitigen Annäherung eines Objekts, wie beispielsweise der Hand 5, schaltet die Steuereinrichtung von dem Bedienmodus B1 mit der Bildschirmtastatur 15 in einen alternativen Bedienmodus B2 um, welcher tastaturlos ist, das heißt ohne die Bildschirmtastatur 15. Dieser alternative Bedienmodus B2 ist in der Figur ebenfalls veranschaulicht. Beispielsweise kann vorgesehen sein, dass für den Fahrer eine Eingabefläche 23 für eine Handschrifteingabe auf dem Berührungsbildschirm 14 bereitgestellt wird. Der Fahrer kann mit dem Finger 6 eine Zeichenspur 24 auf der Eingabefläche 23 zeichnen. Eine Handschrifterkennungseinrichtung 25 der Steuereinrichtung 13 wandelt dann die Zeichenspur 24 in an sich bekannter Weise in ein erkanntes Zeichen 26 um, das wiederum beispielsweise in dem Ausgabefeld 17 angezeigt werden kann. Hierdurch ist es dem Benutzer ermöglicht, die korrekte Erkennung der Zeichenspur 24 zu überprüfen.

Zusätzlich oder alternativ zur Handschrifteingabe kann vorgesehen sein, dass der Fahrer 3 ein Sprachkommando 27 aussprechen kann, das in der Figur durch Schallwellen repräsentiert ist. Eine Schallerfassungseinrichtung 28, beispielsweise ein Mikrofon oder eine Anordnung aus mehreren Mikrofonen, kann das Sprachkommando 27 erfassen und als Sprachsignal 29 der Steuereinrichtung 13 bereitstellen. Durch eine Spracherkennungseinrichtung 30 kann die Steuereinrichtung 13 aus der Spracheingabe 27 ebenfalls eine Zeichenfolge generieren, die als Eingabe anstelle einer Tastatureingabe genutzt werden kann.

Zusätzlich oder alternativ dazu können im alternativen Bedienmodus B2 auch anstelle der Zeichentasten 16 größere und weniger Bedientasten angezeigt sein, die dazu vorgesehen sind, ganze Zeichenfolgen einzugeben, die bereits vorgefertigt sind und die beispielsweise vorbestimmte Navigationsziele, beispielsweise Navigationsfavoriten und/oder bereits zuvor angegebene Navigationsziele, angeben.

Nach der Eingabe einer Zeichenfolge im alternativen Bedienmodus B2 erzeugt die Steuereinrichtung 13 daraus ein entsprechendes Steuersignal 12, um die Fahrzeugkomponente 11, also beispielsweise das Navigationssystem, zu konfigurieren.

So wird es also für eine Texteingabe möglich, zwei Bedienmodi B1, B2 bereitzustellen, nämlich eine Bildschirmtastatur und z.B. eine Handschrifteingabe. Erkennt das System, dass der Fahrer während der Fahrt die Eingabe selber vornehmen möchte, schaltet die Bedienvorrichtung 11 automatisch auf den Handschrifteingabe-Modus, also den alternativen Bedienmodus B2, um. Erkennt die Bedienvorrichtung 11 dagegen, dass der Beifahrer bedient, erlaubt es den Bedienmodus B1 und schaltet automatisch auf die Bildschirmtastatur 15 oder es ermöglicht die Nutzung beider Bedienmodi B1, B2. Hierzu kann dann ein Wahlschalter beispielsweise auf dem Berührungsbildschirm 14 bereitgestellt sein, die dem Beifahrer die Auswahl zwischen den Bedienmodi B1, B2 erlaubt.

Somit gibt es für den Fahrer kein Sicherheitsrisiko durch Ablenkung während der Bedienung der Bedienvorrichtung 10, da ihm die ablenkende Bildschirmtastatur 15 nicht bereitsteht. Bei Annäherung mit einem Gegenstand oder einer Hand von der Fahrerseite 19 her wird der Berührungsbildschirm 14 für die Bedienung gesperrt, also beispielsweise ausgeschaltet oder der alternative Bedienmodus B2 aktiviert, während durch Annäherung des Beifahrers von der Beifahrerseite 20 her der Berührungsbildschirm 14 freigegeben bleibt.

Wird die Bildschirmtastatur 15 auf dem Berührungsbildschirm 14 dargestellt und ist bedienbar, so wird bei Annäherung von der Fahrerseite 19 her die Bildschirmtastatur 15 während der Fahrt ausgeblendet. Es wird stattdessen z.B. das Eingabefeld 23 zur Handschrifteingabe angezeigt. Bei einer Annäherung von der Beifahrerseite 20 her wird die Bildschirmtastatur 15 nicht ausgeblendet.

Die Ablenkung des Fahrers ist für Eingaben verhindert, die während der Fahrt nicht absolut notwendig beziehungsweise nicht erlaubt sind, wie beispielsweise die Tastatureingabe eines Ortes im Navigationssystem.

Die Sensoreinrichtung 18 kann beispielsweise durch Gestenerkennung feststellen, von wo sich die Hand 5 oder ein Gegenstand dem Berührungsbildschirm 14 nähert und entsprechend den Berührungsbildschirm 14 sperren oder freigeben. Im Zusammenhang mit der Gestenbedienung können hierbei durch Versuche die relevanten Annäherungswinkel an dem Berührungsbildschirm 14 festgestellt werden. Alternativ dazu können Sensoren vorgesehen sein, die die beschriebene virtuelle Trennebene 22 überwachen können.

Insgesamt zeigt das Beispiel, wie durch die Erfindung eine Tastatur auf einem Touchscreen bei Annäherung des Fahrers von der Fahrerseite gesperrt und durch Annäherung des Beifahrers von der Beifahrerseite her freigegeben werden kann.

## Patentansprüche

1. Bedienvorrichtung (10) für ein Kraftfahrzeug (1), aufweisend:
- eine berührungssensitive Anzeigeeinrichtung (14), und
- eine Steuereinrichtung (13), die dazu eingerichtet ist, in einem Bedienmodus (B1) auf der Anzeigeeinrichtung (14) eine Bildschirmtastatur (15) zum Empfangen einer Zeichenfolge von einem Benutzer anzuzeigen, wobei eine Sensoreinrichtung (18) dazu eingerichtet ist, eine Annäherung eines Objekts (5) an die Anzeigeeinrichtung (14) zu detektieren, und wobei zwischen einer fahrerseitigen Annäherung von einer vorbestimmten Fahrerseite (19) her und einer beifahrerseitigen Annäherung von einer der Fahrerseite (19) gegenüberliegenden Beifahrerseite (20) her unterschieden wird,
**dadurch gekennzeichnet, dass**
die Steuereinrichtung (13) dazu eingerichtet ist, bei einer detektierten fahrerseitigen Annäherung des Objekts (5) den Bedienmodus (B1) mit seiner Bildschirmtastatur (15) zu deaktivieren, sodass dem Fahrer die Bildschirmtastatur (15) nicht zur Verfügung steht, und stattdessen einen von dem Bedienmodus (B1) verschiedenen, alternativen Bedienmodus (B2) zu aktivieren, in welchem eine Eingabealternative zum Empfangen der Zeichenfolge ohne die Bildschirmtastatur (15) bereitgestellt wird.

2. Bedienvorrichtung (10) nach Anspruch 1, wobei der alternative Bedienmodus (B2) anstelle der Bildschirmtastatur (15) eine Handschrifteingabe für einen Fahrer (3) des Kraftfahrzeugs (1) umfasst und hierzu die Steuereinrichtung (13) dazu eingerichtet ist, mittels der Anzeigeeinrichtung (14) an dieser eine Zeichenspur (24) zu erfassen und/oder mittels einer Kamera eine vom Fahrer (3) frei im Raum berührungslos durchgeführte Handbewegung und/oder Fingerbewegung als Zeichenspur zu erfassen.

3. Bedienvorrichtung (10) nach einem der vorhergehenden Ansprüche, wobei die Steuereinrichtung (13) dazu eingerichtet ist, für den alternativen Bedienmodus (B2) auf der Anzeigeeinrichtung (14) im Vergleich zu Tasten (16) der Bildschirmtastatur (15) in der Anzahl reduzierte und/oder in der Größe größere Bedienflächen zum Empfangen der Zeichenfolge darzustellen.

4. Bedienvorrichtung (10) nach einem der vorhergehenden Ansprüche, wobei die Steuereinrichtung (13) dazu eingerichtet ist, für den alternativen Bedienmodus (B2) eine Sprachbedienung (30) zu aktivieren.

5. Bedienvorrichtung (10) nach einem der vorhergehenden Ansprüche, wobei die Steuereinrichtung (13) dazu eingerichtet ist, für den alternativen Bedienmodus (B2) eine Eingaberückmeldung bereitzustellen, indem ein bereits erfasstes Zeichen (26) der Zeichenfolge auf der Anzeigeeinrichtung (14) angezeigt und/oder mittels einer synthetischen Sprachausgabe akustisch angesagt wird.

6. Bedienvorrichtung (10) nach einem der vorhergehenden Ansprüche, wobei die Steuereinrichtung (13) dazu eingerichtet ist, von dem Bedienmodus (B1) in den alternativen Bedienmodus (B2) nur zu wechseln, falls eine Fahrgeschwindigkeit des Kraftfahrzeugs (1) größer als eine vorbestimmte Mindestgeschwindigkeit ist.

7. Bedienvorrichtung (10) nach einem der vorhergehenden Ansprüche, wobei die Steuereinrichtung (13) dazu eingerichtet ist, eine im Bedienmodus (B1) bereits eingegebene Teilzeichenfolge bei einem Wechsel in den alternativen Bedienmodus (B2) beizubehalten und die weitere Eingabe der Zeichenfolge im alternativen Bedienmodus (B2) fortzuführen.

8. Bedienvorrichtung (10) nach einem der vorhergehenden Ansprüche, wobei die Steuereinrichtung (13) dazu eingerichtet ist, den alternativen Bedienmodus (B2) wieder zu deaktivieren, falls die Sensoreinrichtung (18) eine Abwesenheit des fahrerseitigen Objekts (5) oder erst falls die Sensoreinrichtung (18) eine beifahrerseitige Annäherung eines Objekts signalisiert.

9. Kraftfahrzeug (1) mit einer Bedienvorrichtung (10) nach einem der vorhergehenden Ansprüche, wobei eine Anzeigeeinrichtung (14) der Bedienvorrichtung (10) zwischen einem Fahrersitz und einem Beifahrersitz des Kraftfahrzeugs (1) angeordnet ist.

10. Verfahren zum Empfangen einer Zeichenfolge von einem Benutzer (3) mittels einer Bedienvorrichtung (10) in einem Kraftfahrzeug (1), wobei eine Steuereinrichtung (13) der Bedienvorrichtung (10) in einem Bedienmodus (B1) auf einer berührungssensitiven Anzeigeeinrichtung (14) eine Bildschirmtastatur (15) zum Empfangen der Zeichenfolge anzeigt und eine Sensoreinrichtung (18) eine Annäherung eines Objekts (5) an die Anzeigeeinrichtung (14) detektiert, wobei zwischen einer fahrerseitigen Annäherung von einer vorbestimmten Fahrerseite (19) her und einer beifahrerseitigen Annäherung von einer der Fahrerseite (19) gegenüberliegenden Beifahrerseite (20) her unterschieden wird,
**dadurch gekennzeichnet, dass**
die Steuereinrichtung (13) bei einer detektierten fahrerseitigen Annäherung des Objekts (5) den Bedienmodus (B1) mit seiner Bildschirmtastatur (15) deaktiviert, sodass dem Fahrer die Bildschirmtastatur (15) nicht zur Verfügung steht, und stattdessen einen von dem Bedienmodus (B1) verschiedenen, alternativen Bedienmodus (B2) aktiviert, in welchem eine Eingabealternative zum Empfangen der Zeichenfolge ohne die Bildschirmtastatur (15) bereitgestellt wird.

## Claims

1. Operating device (10) for a motor vehicle (1) having:
- a touch-sensitive display device (14) and
- a control device (13) which is configured in an operating mode (B1) to display on the display device (14) a screen keyboard (15) for receiving a character sequence from a user, wherein a sensor device (18) is configured to detect an approach of an object (5) to the display device (14), and wherein a distinction is made between a driver-side approach from a predefined driver side (19) and a passenger-side approach from a passenger side (20) opposite the driver side (19),
**characterised in that**
the control device (13) is configured on detecting a driver-side approach of the object (5) to deactivate the operating mode (B1) with its screen keyboard (15) so that the screen keyboard (15) is not available to a driver and instead to activate an alternative operating mode (B2) which is different from the operating mode (B1), in which alternative operating mode an alternative input is provided for receiving the character sequence without the screen keyboard (15).

2. Operating device (10) according to any claim 1, wherein the alternative operating mode (B2) includes a handwritten input for a driver (3) of the motor vehicle (1) instead of the screen keyboard (15), and the control device (13) is configured to detect a character trace (24) on the latter by means of the display device (14) and/or to detect by means of a camera a contactless hand movement and/or finger movement performed freely in space by the driver (3) as the character trace.

3. Operating device (10) according to any of the preceding claims, wherein the control device (13) is configured for the alternative operating mode (B2) on the display device (14) to display a reduced number of operating areas and/or larger-sized operating areas for receiving the character sequence compared to keys (16) of the screen keyboard (15).

4. Operating device (10) according to any of the preceding claims, wherein the control device (13) is configured to activate a voice recognition (30) for the alternative operating mode (B2).

5. Operating device (10) according to any of the preceding claims, wherein the control device (13) is configured to provide input feedback for the alternative operating mode (B2) in that a character (26) of the character sequence which has already been captured is displayed on the display device (14) and/or is announced acoustically by means of a synthetic voice output.

6. Operating device (10) according to any of the preceding claims, wherein the control device (13) is configured to only change from the operating mode (B1) to the alternative operating mode (B2) when a driving speed of the motor vehicle (1) is greater than a predetermined minimum speed.

7. Operating device (10) according to any of the preceding claims, wherein the control device (13) is configured to retain a partial character sequence, which has already been input in the operating mode (B1), in the event of a change to the alternative operating mode (B2) and to continue the further input of the character sequence in the alternative operating mode (B2).

8. Operating device (10) according to any of the preceding claims, wherein the control device (13) is configured to deactivate the alternative operating mode (B2) again when the sensor device (18) signals an absence of the driver-side object (5) or only when the sensor device (18) signals a passenger-side approach of an object.

9. Motor vehicle (1) with an operating device (10) according to any of the preceding claims, wherein a display device (14) of the operating device (10) is arranged between a driver seat and a passenger seat of the motor vehicle (1).

10. Method for receiving a character sequence from a user (3) by means of an operating device (10) in a motor vehicle (1), wherein a control device (13) of the operating device (10) in an operating mode (B1) displays on a touch-sensitive display device (14) a screen keyboard (15) for receiving the character sequence and a sensor device (18) detects an approach of an object (5) to the display device (14), wherein a distinction is made between a driver-side approach from a predefined driver side (19) and a passenger-side approach from a passenger side (20) opposite the driver side (19),
**characterised in that** the control device (13) with a detected driver-side approach of the object (5) deactivates the operating mode (B1) with its screen keyboard (15) so that the screen keyboard (15) is not available to the driver and instead activates an alternative operating mode (B2) which is different from the operating mode (B1), in which alternative operating mode an alternative input is provided for receiving the character sequence without the screen keyboard (15).

## Revendications

1. Instrument (10) pour un véhicule automobile (1), présentant :
- un appareil d'affichage (14) tactile, et
- un appareil de commande (13), qui est aménagé pour afficher dans un mode de commande (B1) sur l'appareil d'affichage (14) un clavier virtuel (15) pour la réception d'une suite de caractères d'un utilisateur, dans lequel un appareil de détection (18) est aménagé pour détecter une approche d'un objet (5) au niveau de l'appareil d'affichage (14), et dans lequel une distinction est faite entre une approche côté conducteur depuis un côté conducteur prédéterminé (19) et une approche côté passager depuis un côté passager (20) opposé au côté conducteur (19),
**caractérisé en ce que**
l'appareil de commande (13) est aménagé pour désactiver, lors d'une approche détectée côté conducteur de l'objet (5), le mode de commande (B1) avec son clavier virtuel (15), si bien que le clavier virtuel (15) n'est pas disponible pour le conducteur, et activer en lieu et place un autre mode de commande (B2) différent du mode de commande (B1), dans lequel une alternative de saisie est mise à disposition pour la réception de la suite de caractères sans le clavier virtuel (15).

2. Instrument (10) selon la revendication 1, dans lequel l'autre mode de commande (B2) en lieu et place du clavier virtuel (15) comprend une saisie manuscrite pour un conducteur (3) du véhicule automobile (1) et l'appareil de commande (13) est aménagé pour ce faire pour détecter au moyen de l'appareil d'affichage (14) au niveau de celui-ci une trace de caractère (24) et/ou détecter au moyen d'une caméra un mouvement de la main et/ou un mouvement de doigt en tant que trace de caractère effectué librement dans l'espace sans contact par le conducteur (3).

3. Instrument (10) selon l'une quelconque des revendications précédentes, dans lequel l'appareil de commande (13) est aménagé pour représenter pour l'autre mode de commande (B2) sur l'appareil d'affichage (14) des surfaces de commande réduites en nombre et/ou de plus grande taille comparé aux touches (16) du clavier virtuel (15) pour la réception de la suite de caractères.

4. Instrument (10) selon l'une quelconque des revendications précédentes, dans lequel l'appareil de commande (13) est aménagé pour activer une commande vocale (30) pour l'autre mode de commande (B2).

5. Instrument (10) selon l'une quelconque des revendications précédentes, dans lequel l'appareil de commande (13) est aménagé pour mettre à disposition pour l'autre mode de commande (B2) un retour de saisie par le fait qu'un caractère déjà saisie (26) de la suite de caractères est affiché sur l'appareil d'affichage (14) et/ou annoncé acoustiquement au moyen d'une sortie vocale synthétique.

6. Instrument (10) selon l'une quelconque des revendications précédentes, dans lequel l'appareil de commande (13) est aménagé pour passer uniquement du mode de commande (B1) à l'autre mode de commande (B2) si une vitesse de conduite du véhicule automobile (1) est supérieure à une vitesse minimum prédéterminée.

7. Instrument (10) selon l'une quelconque des revendications précédentes, dans lequel l'appareil de commande (13) est aménagé pour conserver une suite de caractères partielle déjà saisie dans le mode de commande (B1) lors d'un passage à l'autre mode de commande (B2) et poursuivre l'autre saisie de la suite de caractères dans l'autre mode de commande (B2).

8. Instrument (10) selon l'une quelconque des revendications précédentes, dans lequel l'appareil de commande (13) est aménagé pour désactiver à nouveau l'autre mode de commande (B2), si l'appareil de détection (18) signale une absence de l'objet côté conducteur (5) ou seulement si l'appareil de détection (18) signale une approche côté passager d'un objet.

9. Véhicule automobile (1) avec un instrument (10) selon l'une quelconque des revendications précédentes, dans lequel un appareil d'affichage (14) de l'instrument (10) est agencé entre un siège conducteur et un siège passager du véhicule automobile (1).

10. Procédé de réception d'une suite de caractères d'un utilisateur (3) au moyen d'un instrument (10) dans un véhicule automobile (1), dans lequel un appareil de commande (13) de l'instrument (10) affiche dans un mode de commande (B1) sur un appareil d'affichage (14) tactile un clavier virtuel (15) pour la réception de la suite de caractères et un appareil de détection (18) détecte une approche d'un objet (5) au niveau de l'appareil d'affichage (14), dans lequel une distinction est faite entre une approche côté conducteur depuis un côté conducteur prédéterminé (19) et une approche côté passager depuis un côté passager (20) opposé au côté conducteur (19),
**caractérisé en ce que**
l'appareil de commande (13) désactive, lors d'une approche détectée côté conducteur de l'objet (5), le mode de commande (B1) avec son clavier virtuel (15), si bien que le clavier virtuel (15) n'est pas disponible pour le conducteur, et active en lieu et place un autre mode de commande (B2) différent du mode de commande (B1), dans lequel une alternative de saisie est mise à disposition pour la réception de la suite de caractères sans le clavier virtuel (15).
